# EUROPEAN PATENT SPECIFICATION

(11) **EP 1 705 497 B1**
(45) Date of publication and mention of the grant of the patent: **26.06.2019**
(21) Application number: 05006125.8
(22) Date of filing: 21.03.2005
(51) Int. Cl.: G01S 7/497, G01S 7/481

(54) **Efficient and reliable testing of laser rangefinders**
Leistungsfähige und zuverlässige Prüfung von Laserentfernungsmessern
Essai efficace et fiable des télémètres de laser

(43) Date of publication of application: 27.09.2006
(73) Proprietor: SAAB AB, 581 88 Linköping (SE)
(72) Inventor: Yngve, Olof, 732 30 Arboga (SE)
(74) Representative: Holmberg, Magnus

(56) References cited:
- DE-A1- 3 700 962
- US-A- 4 121 890
- US-A- 4 552 454

## Description

### THE BACKGROUND OF THE INVENTION AND PRIOR ART

The present invention relates generally to testing of laser rangefinders. More particularly the invention relates to a laser rangefinder tester according to the preamble of claim 1 and a method for testing the performance of a laser range finder according to the preamble of claim 13.

The function and performance of laser rangefinders, which for instance are included in military weapon systems, need to be tested regularly. In cases where the rangefinder is mounted onto a vehicle, such as a tank or similar combat vehicle, this vehicle must normally be taken to a particular testing-range, for verifying the rangefinder's operative condition and determining whether any adjustments are necessary.

The testing-range typically includes a target, which is arranged on a stand located at a certain free-sight distance from the laser rangefinder. The testing procedure involves aiming the rangefinder towards the target, and measuring the distance thereto by means of at least one pulse of laser energy. Specifically, a measured delay time between transmission of the pulse and reception of a corresponding target reflex represents a measure of the distance to the target. Since most military laser rangefinders emit light of such intensity and wavelength that the light is harmful to an unprotected human eye, certain safety measurements are necessary. For instance, the testing-range must be closed, so that no one can enter the test area while the testing is carried out, and/or the emitted laser energy must be attenuated by means of various filtering, and to compensate for this attenuation, a particular high-reflective target must be used.

In addition to verifying the distance accuracy, the testing normally involves determining the laser rangefinder's sensitivity, i.e. its capability to measure sufficiently large distances under predefined conditions. This type of testing may involve applying an optical attenuation filter in front of the rangefinder's transmitter, thus simulating an increased distance and/or deterioration of the transmission conditions. In order to pass the test, the rangefinder must be capable of measuring the distance to the target at a certain attenuation of the transmitted signal.

Moreover, the testing may involve determining the rangefinder's distance resolution, i.e. how well it handles separation of targets that are close to one another with respect to the optic angle, however are located at different distances. Additionally, it may be determined how well the measurement lobe is aligned with view field of the sight means. Ideally, the laser lobe coverage should correspond to a well-defined area in the sight means, such as the central ring of a hairline.

Bringing a heavy vehicle, such as a military tank to the above-mentioned testing-range exclusively to test the vehicle's rangefinder is relatively problematical and expensive, especially if the vehicle is stored in a military depot or similar. Naturally, it is preferable if instead the testing can be completed without having to move the vehicle. The outdoor testing at the testing-range is further complicated by varying weather and light conditions, as well as the amount of manual labor required to set up the target and to accomplish a safe testing environment.

Therefore, particular testing devices have been developed. The patent document DE 3700962, A1 describes one example of such a laser rangefinder tester, which is intended to receive the light beam emitted from a rangefinder's laser transmitter and to return a delayed light signal to the rangefinder's receiver, so as to simulate an artificial target equivalent to the type of target described above. Here, an inlet objective conveys the incoming laser light to a set of optical delay lines via a particular facet associated with each delay line. A corresponding facet in the opposite end of each optical delay line emits outgoing light through an outlet objective. The individual delay lines may have different lengths in order to imitate targets located at different distances, thus enabling testing of the rangefinder's depth resolution.

Nevertheless, this design requires that each facet represent a relatively large portion of a typical laser lobe area. Therefore, the measurement resolution becomes comparatively coarse. Moreover, the rangefinder's distance accuracy and sensitivity are measured separately based on simulated parameters. This leads to a relatively counter intuitive test procedure and an unrealistic behavior in comparison to a target at a testing-range. Another limitation is that one-eyed range finders cannot be tested. The design is also mechanically weak and requires extensive calibration. Consequently it is difficult to fully rely on the measurement results.

The patent document US4552454 A describes a test system for a laser rangefinder having signal transmission and reception paths. The test system comprises a thick lens collimator which receives energy from a transmitter for input through an optical fiber. The fiber has a partial reflector and a full reflector to simulate sites of targets, and the reflected energy is transmitted back through a collimator to a receiver. Partial reflection of energy is provided by gold placed on a surface of one of two aligned and spaced termini of the fiber.

### SUMMARY OF THE INVENTION

It is therefore an object of the present invention to solve the problems above, and thus provide a reliable, robust and flexible solution for testing a laser rangefinder.

According to one aspect of the invention, this object is achieved by the initially described rangefinder tester, wherein the distal end surfaces of the optical waveguides are adapted to reflect at least a portion of a second amount of laser energy that has propagated from the proximal end surface to the distal end surface back to the proximal end surface. The thus reflected energy represents the delayed laser energy returned to the rangefinder.

An important advantage attained by this design is that the laser energy is actually reflected back towards the rangefinder. As a result, the tester shows a more realistic behavior than the known testers. Furthermore, the almost, or completely, identical beam paths of the transmitted and the received laser energy accomplish a reflected energy distribution per space angle that is very similar to a real target.

The laser rangefinder tester includes a filter receptacle, which is arranged to hold at least one laser-energy attenuation filter in a passageway for the incoming energy. Hence, by mounting one or more filters in the receptacle, a reduced amount of the incoming laser energy will be passed on to the ray focusing means. Thereby, the rangefinder's sensitivity can be tested by applying filter with a predefined attenuation factor, and then checking whether the range detection is possible.

According to a preferred embodiment of this aspect of the invention at least one first energy absorption means is arranged at the distal end surfaces. This/these absorption means is/are adapted to terminate a main part of any laser energy of the second amount of laser energy exiting from the distal end surfaces. Namely, if for instance the optical waveguides are fiber cables being open at the distal end surfaces, a significant amount of laser energy will exit from these surfaces. Further, if such energy would exit from one cable and enter into another cable, this would deteriorate the performance of the tester. Therefore, the first energy absorption means is desirable.

According to another preferred embodiment of this aspect of the invention, the ray focusing means is further adapted to collimate and direct delayed laser energy, which exits from the proximal end of at least one of the optical waveguides, to a receiving means of the laser rangefinder. Thus, the beam path of the outgoing (i.e. delayed laser energy) largely overlaps the beam path of the incoming laser energy also outside the optical waveguides.

According to further preferred embodiments of this aspect of the invention, the ray focusing means either includes a mirror having a concave reflector, or a lens element of convex-spherical type. The concave mirror is advantageous because it is relatively wavelength independent, and may thus be used for many different lasers. It also enables transmission of visible light, so that for example the simulated target (i.e. the image of the proximal end surfaces of the waveguides) can be shown to an operator during performance of a test. A lens, on the other hand, avoids any spherical-aberration problems.

According to still another preferred embodiment of this aspect of the invention, the laser rangefinder tester includes a beam splitter that is arranged between the filter receptacle and the ray focusing means. The beam splitter is adapted to reflect a substantial amount of the incoming laser energy and to permit a substantial amount of the returning delayed laser energy to pass through. Hence, the incoming and outgoing beam paths may become identical all the way between the beam splitter and the at least one reflecting means at the distal end surfaces of the optical waveguides.

According to yet another preferred embodiment of this aspect of the invention, the laser rangefinder tester includes a second energy absorption means, which is adapted to terminate any incoming laser energy that has passed through the beam splitter. Thereby, an unintentional leakage of laser energy directly from the transmitter side to the receiver side is avoided.

According to another preferred embodiment of this aspect of the invention, the laser rangefinder tester includes a mirror element, which is adapted to reflect a substantial portion of the delayed laser energy towards the receiving means of the laser rangefinder. The mirror element has a laser-energy reflecting surface being parallel to a surface of the beam splitter that is adapted to reflect the substantial amount of the incoming laser energy. Hence, the reflected energy is made detectable by the rangefinder's receiver detector in a manner equivalent to a normal operation of the rangefinder.

According to a further preferred embodiment of this aspect of the invention, the laser rangefinder tester includes a guide means, which is adapted to allow an adjustment of a first distance between the mirror element and the beam splitter, so that the tester can be adapted to a second distance between the a transmitter and the receiving means of the laser rangefinder. Thereby, the tester may be used for different rangefinders having different separation between the transmitter and the receiving means. Moreover, as will become apparent from the detailed description below, according to one embodiment of the invention, also one-eyed rangefinders may be tested, i.e. where laser energy is both emitted and received via one and the same opening.

According to yet another preferred embodiment of this aspect of the invention, the optical delay means includes a sub-group of optical waveguides comprising at least one first waveguide, which has a different length than at least one second waveguide in a remaining group of waveguides in the optical delay means. For example, the at least one waveguide in the sub-group may be shorter than the waveguides outside this group, and the shorter waveguide may be arranged in a particular corner of optical delay means to enable testing of a rangefinder's depth resolution (i.e. the capability to distinguish targets at similar view angles that are located at different distances).

According to still another preferred embodiment of this aspect of the invention, the laser rangefinder tester includes at least one laser-energy sensor, which is arranged at the distal end surfaces of the optical waveguides. This sensor is adapted to register laser energy that has propagated through one or more of the optical waveguides, and in response thereto produce a sensor signal on an output terminal of the tester. Consequently, a computer may process the sensor signal, and for example a graphical representation of the amount of laser energy received at the simulated target may be presented on a computer display.

According to another preferred embodiment of this aspect of the invention, the laser rangefinder tester includes an optical input terminal through which an optical reference signal may be received. The optical input terminal is optically connected to the distal end surface of a particular optical waveguide in the optical delay means, for instance a centrally located waveguide. Thus, if instead of transmitting laser energy from the rangefinder's transmitter, laser energy is transmitted from an external source via the optical input terminal to the rangefinder's receiver, reference measurements can be made, which facilitates the determination of any misalignment between the receiver and the sight means of the laser rangefinder. By also entering an amount of visible light through the optical input terminal, this determination may be further facilitated.

According to another aspect of the invention, this object is achieved by the initially described use, wherein the use involves emitting laser energy from the laser rangefinder's transmitter; and registering delayed laser energy returned from the laser rangefinder tester in the rangefinder's detector. Thereby, an accurate and reliable test result is obtained.

According to a preferred embodiment of this aspect of the invention, the use involves adjusting a relative orientation of the laser transmitter and the sight means of the laser rangefinder in response an output signal produced by the laser detector. Hence, testing and adjusting may be carried out iteratively to achieve a gradually improved performance.

The proposed tester design is advantageous in that the delayed laser energy returned to the rangefinder's detector has characteristics corresponding to those of an actual target with respect to angular behavior, timing and intensity. For example, when only a portion of the proposed simulated target is hit by laser energy, the response is very similar to that of an actual physical target. Therefore, the testing can be made highly realistic and reliable. Moreover, the tester itself can be made an entirely passive unit, which is inherently reliable and uncomplicated to use.

### BRIEF DESCRIPTION OF THE DRAWINGS

The present invention is now to be explained more closely by means of preferred embodiments, which are disclosed as examples, and with reference to the attached drawings.
- Figure 1: shows a schematic side-view of a per se known laser rangefinder that may be tested by the proposed tester;
- Figure 2: shows a side-view of a laser rangefinder tester according to a first embodiment of the invention;
- Figure 3: shows a side-view of a laser rangefinder tester according to a second embodiment of the invention;
- Figure 4: shows a side-view of a laser rangefinder tester according to a third embodiment of the invention;
- Figure 5: schematically illustrates an optical delay means according to one embodiment of the invention;
- Figure 6: shows a block diagram over an arrangement for presenting a laser signal registered at a simulated target according to one embodiment of the invention; and
- Figure 7: shows a block diagram over an arrangement for performing a reference measurement in respect of a laser rangefinder according to one embodiment of the invention.

### DESCRIPTION OF PREFERRED EMBODIMENTS OF THE INVENTION

During normal operation of a laser rangefinder, the unit emits laser energy towards intended targets, and determines the respective distances thereto by measuring the time delay between emission of a particular amount of energy (e.g. a pulse) and reception of a corresponding target reflex. Namely, since (at least under normal atmospheric conditions) the light propagation speed is known and essentially constant, there is a linear relationship between the delay time and the distance to the target.

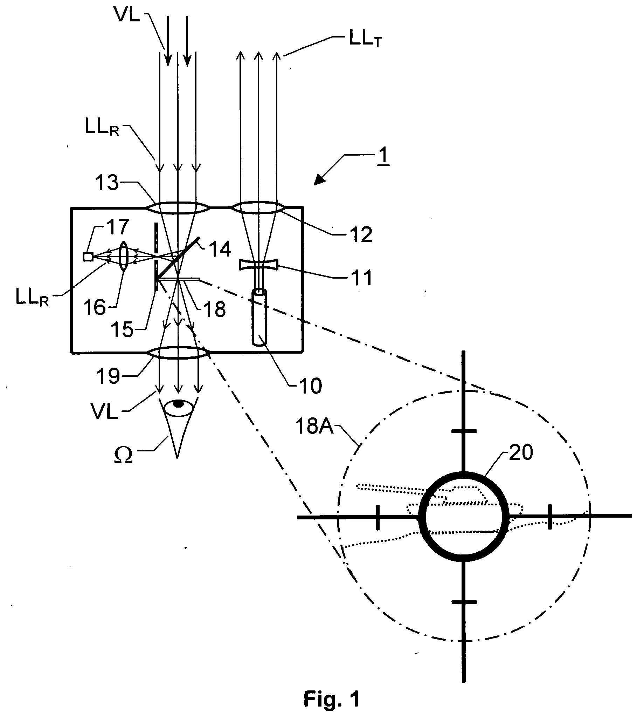

Figure 1 shows a schematic side-view of an exemplary laser rangefinder 1, which includes a laser transmitter 10 and a laser detector 17. The transmitter 10 produces outgoing laser energy LL_{T} that is emitted towards potential targets via a group of lens elements 11 and 12. Typically these lens elements are optimized with respect to performance and weight/bulkiness. We presume that an amount of the outgoing laser energy LL_{T} hits a particular target, and is reflected back towards the rangefinder 1 as a delayed, and highly attenuated version LL_{R} of the outgoing laser energy LL_{T}. The reflected laser energy LL_{R} enters the rangefinder 1 via a receiving means 13 including at least one lens. The receiving means 13 also receives visible light VL, for instance from the target which was hit by the outgoing laser energy LL_{T}. A beam splitter 14 separates the reflected laser energy LL_{R} from the visible light VL, such that the reflected laser energy LL_{R} is diverted towards the detector 17, typically via an aperture 15 and optionally a lens element 16. The beam splitter 14 passes the visible light VL onto an ocular 19, via a sight means 18, so that an operator Ω can observe the visible light VL (thus seeing the target).

Preferably, the aperture 15 and the sight means 18 are mechanically fixated relative one another, and have such angular and dimensional interrelationship that an opening in the aperture 15 towards the detector 17 matches a reference portion of the sight means 18 (e.g. a central hairline ring 20). In other words, the beam width admitted to the detector 17 via the aperture 15 is equivalent to the dimension of the reference portion 20 of the sight means 18. Thereby, the effective detector beam width (e.g. 1 mrad) is visualized for an operator Ω viewing the sight means 18 through the ocular 19. The operator's Ω view field through the ocular 19 is here illustrated by means of a dashed figure segment 18A.

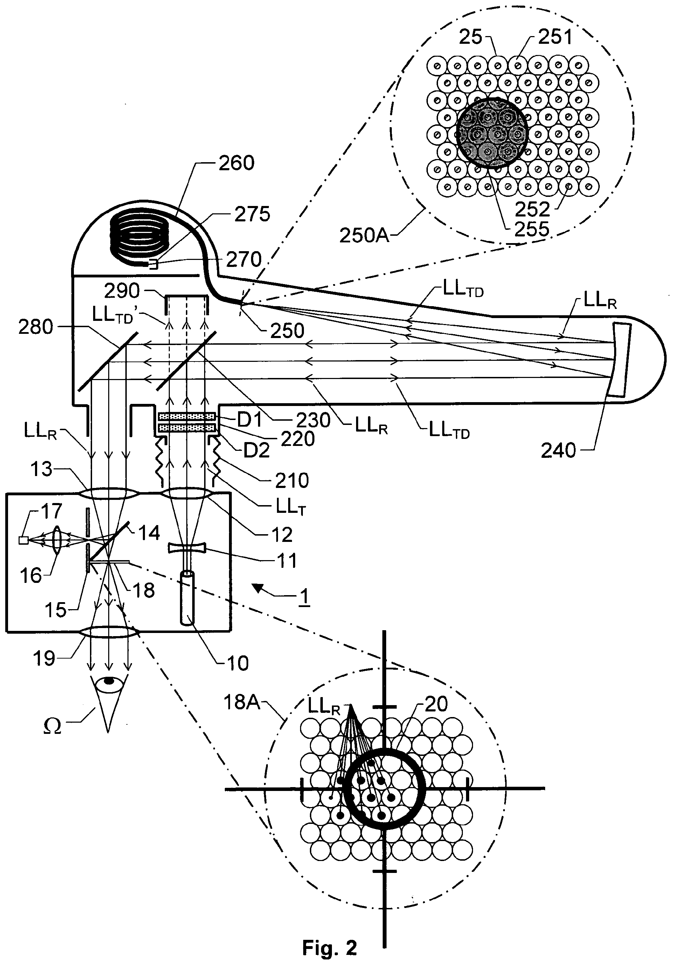

Figure 2 shows a side-view of a laser rangefinder tester according to a first embodiment of the invention. For illustrative purposes the figure 2 also shows the laser rangefinder 1 of figure 1.

The laser rangefinder tester includes a reception means 210, a ray focusing means 240 and an optical delay means 260. The reception means 210 receives incoming laser energy LL_{T} emitted from the laser rangefinder 1. Preferably, the reception means 210 is adapted to prevent that the laser energy LL_{T} emitted from the laser rangefinder 1 leaks outside of the tester. Hence, the reception means 210 may include bellows, or similar.

At least a first amount LL_{TD} of the incoming laser energy LL_{T} reaches the ray focusing means 240, which focuses the first amount of energy LL_{TD} onto the optical delay means 260. The optical delay means 260, in turn, includes a number of optical waveguides 25 that have a respective proximal end surface and a respective distal end surface, where the proximal end surfaces face the ray focusing means 240. Thus, the ray focusing means 240 specifically focuses the first amount of energy LL_{TD} onto at least one of the proximal end surfaces. Here, the focal plane 250 of the ray focusing means 240 is shown in a dashed figure segment 250A. As can be seen in this example, the optical delay means 260 includes 64 optical waveguides 25, which are arranged to form an essentially rectangular cross-section area of proximal end surfaces. Of course, according to the invention, any alternative number and configuration of optical waveguides is conceivable, such as 50-200 waveguides arranged to form a cross-section area of arbitrary target silhouette. Nevertheless, it is preferable if a lobe 255 of the first amount LL_{TD} of laser energy being focused onto the optical delay means 260 covers at least the proximal end sections of 10-20 waveguides, since this results in a reasonably stable delayed laser energy signal LL_{R}. Each optical waveguide 25 has a cladding 251 and a core 252. For efficiency reasons, it is generally desirable that the optical waveguide 25 is a multi mode fiber with a comparatively wide cut-off angle and a relatively large core-to-cladding relationship. Namely, a second amount of the first amount of the incoming laser energy LL_{TD} that strikes the proximal end surfaces of the cores 252 of a group of illuminated optical waveguides 25 (i.e. located under the lobe 255) at an angle smaller than the cut-off angle enters these waveguides and is transported there through.

The distal end surfaces 270 of the optical waveguides 25 in the optical delay means 260 are adapted to reflect at least a portion of the energy that has propagated through the illuminated optical waveguides 25, so that when this energy reaches the respective distal end surfaces 270, a portion of the second amount of energy LL_{TD} is reflected back into the illuminated optical waveguides 25. Thereby, energy is transported back through each illuminated waveguide 25 to the respective proximal end surface where this energy constitutes a component of the delayed laser energy LL_{R}.

According to one embodiment of the invention, the optical waveguides 25 are fiber cables, which are open at the distal end surfaces 270. Since this results in a refractive index transition at the distal end surface 270 of each fiber cable, some of the energy having propagated through the cable will be reflected back into the cable again. However, a significant amount of laser energy will also exit from each distal end surface 270. Therefore, a first energy absorption means 275 is preferably arranged at the end surfaces 270, so that this means 275 is adapted to terminate a main part of any laser energy of the second amount of laser energy LL_{TD} that exit from the end surfaces 270. Naturally, according to the invention, other reflecting means may be arranged at the distal end surfaces 270. In any case, these surfaces have well-defined optical properties, such that the reflection in each waveguide 25 is essentially the same.

Preferably, after exiting from the proximal end surfaces of the illuminated optical waveguides 25, also the delayed laser energy LL_{R} returns to the ray focusing means 240, which collimates the beams of this energy and direct it towards a receiving means 13 of the laser rangefinder 1. According to the illustrated embodiment of the invention, the ray focusing means includes at least one mirror 240, which is a concave reflector (spherical or off-axis parabolic). A concave off-axis parabolic reflector is advantageous because it enables a more compact design. A concave spherical reflector, on the other hand, is normally less expensive.

The proposed tester may also contain a filter receptacle 220, which is arranged to hold at least one laser-energy attenuation filter in a passageway for the incoming energy LL_{T}, so as when one or more filters D1 and D2 are. mounted in the receptacle 220, a reduced amount LL_{TD} of the incoming laser energy LL_{T} is passed on to the ray focusing means 240. Particularly, if the filters D1 and D2 impose a predefined attenuation factor, say 20 dB, the rangefinder's sensitivity can be tested by checking whether range detection is possible also under such attenuated signal conditions.

For practical reasons it is further preferable if the tester includes a beam splitter 230 and a mirror element 280. The beam splitter 230 is arranged between the filter receptacle 220 and the ray focusing means 240, and is adapted to reflect a substantial amount LL_{TD} of the incoming laser energy LL_{T} while permitting a substantial amount of the delayed laser energy LL_{R} to pass through to the mirror element 280. The mirror element 280, in turn, is arranged to reflect a substantial portion of the delayed laser energy LL_{R}, which has passed through the beam splitter 230 towards the receiving means 13 of the laser rangefinder 1.

Preferably, the mirror element 280 has a laser-energy reflecting surface, which is parallel to a surface of the beam splitter 230 that is adapted to reflect the substantial amount LL_{TD} of the incoming laser energy LL_{T}.

The beam splitter 230 may not be completely perfect, and therefore a smaller amount of the incoming laser energy LL_{TD}' might pass through the beam splitter 230 instead of being reflected. Therefore, the tester preferably includes a second energy absorption means 290 arranged behind the beam splitter 230, which absorption means 290 is adapted to terminate any incoming laser energy LL_{TD}' that has passed through the beam splitter 230.

During standard operation of the proposed tester, the laser rangefinder 1 emits incoming laser energy LL_{T} via the reception means 210 and any filters D1 and/or D2 to the beam splitter 230. A first amount LL_{TD} of the incoming laser energy LL_{T} is then reflected by the beam splitter towards the mirror 240, which focuses this energy onto the proximal end surface of at least one of the optical waveguides 25. A second amount of this energy, in turn, propagates through the thus illuminated optical waveguide(s) 25 and is partially reflected at the distal end surfaces thereof 270, and a portion of the second amount of energy propagates back through the illuminated optical waveguides, and exits from their respective proximal end surfaces as delayed laser energy LL_{R} (based on the incoming laser energy LL_{T}). A substantial amount of the delayed laser energy LL_{R} passes through the beam splitter 230 to the mirror element 280, where the energy LL_{R} is reflected out from the tester towards the receiving means 13 of the laser rangefinder 1.

However, the beam splitter 230 also permits visible light to pass through. Naturally, the mirror 240 and the mirror element 280 are also adapted to reflect visible light, so that visible light from the proximal waveguide end surfaces at the focal plane 250 may reach the ocular 19. Consequently, an operator Ω viewing through the ocular 19 may observe an image of the focal plane 250A (i.e. showing the proximal end surfaces of the optical waveguides 25 in the optical delay means 260) along with an image 18A of the sight means 18. Thereby, the operator Ω can adjust the rangefinder 1 so that its sight means 18 aims at a particular portion of the optical delay means 260 (i.e. the simulated target).

For illustrative purposes, the image 18A also shows a graphical representation of the delayed laser energy LL_{R}, which exits from the illuminated optical waveguides 25. However, this energy does *not* reach the ocular 19. Instead, the beam splitter 14 reflects this energy towards the laser detector 17 in the rangefinder 1. As can be seen, there is here a slight misalignment between the transmitter 10 and the detector 17/sight means 18. Namely, when the sight means 18 aims at the center of the simulated target, the lobe 255 hits somewhat left and below of this area. Hence, an adjustment of angular relationship between the transmitter 10 and the detector 17/sight means 18 is necessary. The operator Ω may detect this misalignment by viewing through the ocular 19 (and observing the sight means 18) while tilting in azimuth and/or elevation the rangefinder 1 relative to the tester, so that the lobe 255 moves slowly over the simulated target (represented by the optical delay means 260). Especially moving the detector 17/sight means 18 out over the simulated target edge, and noticing whether this coincides with a range-drop out may provide very useful information. Namely, for a correct alignment of the transmitter 10 and the detector 17/sight means 18, the detector 17 should fail to produce a reasonable range output when the lobe 255 misses the simulated target.

Preferably, the laser rangefinder tester is used to adjust the relative orientation of the transmitter 10 and the detector 17/sight means 18 of the laser rangefinder 1 in response an output signal produced by the laser detector 17 through an iterative process. Hence, the transmitter 10 and the detector 17/sight means 18 gradually become more and more aligned with one another.

Moreover, in order to enable testing of different laser rangefinders 1 having different distances between the transmitter 10 (or more precisely the lens element 12) and the receiving means 13, the tester according to one embodiment of the invention may include a guide means, such as a pair of bed tracks, allowing an adjustment of a first distance between the mirror element 280 and the beam splitter 230, so that the first distance matches a relevant second distance between the transmitter 10 and the receiving means 13 of the laser rangefinder 1. Of course, in this embodiment, a corresponding distance adjustment is also possible between the receiving means 210 (optionally associated with a filter receptacle 220) and an opening for the delayed laser energy LL_{R}.

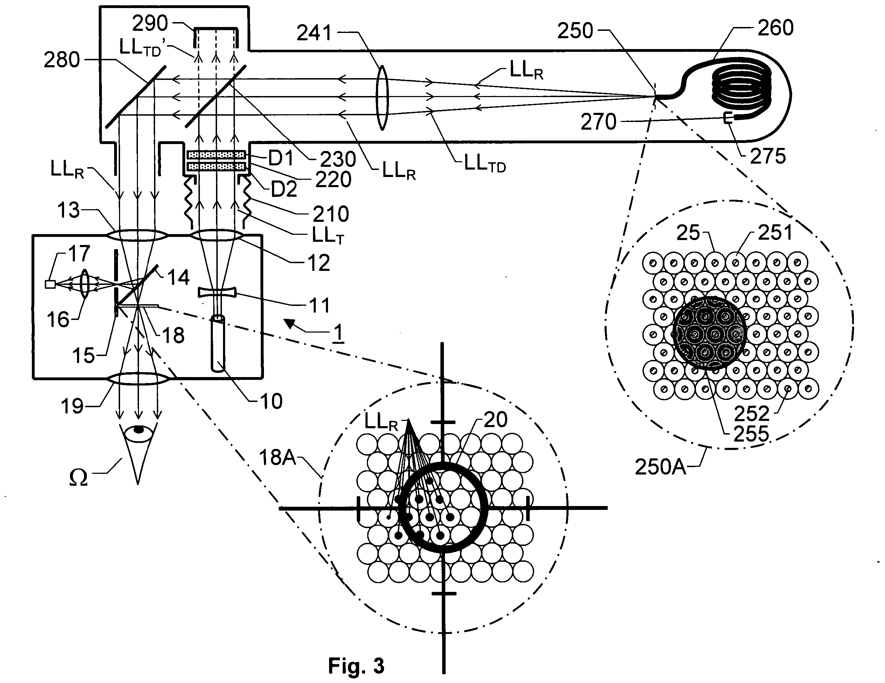

Figure 3 shows a side-view of a laser rangefinder tester according to a second embodiment of the invention. All the reference numerals here, which also occur in the figure 2, represent the same elements as described above with reference to the figure 2. Nevertheless, in this case, the ray focusing means includes at least one lens element 241 of convex-spherical type. The design thereby becomes somewhat less compact than in the above-described embodiment of the invention. The at least one lens element 241 must also have the same focal plane for both visible light and the wavelength of the laser energy used. However, the at least one lens 241 can avoid certain spherical aberrations associated with the concave spherical reflector 240.

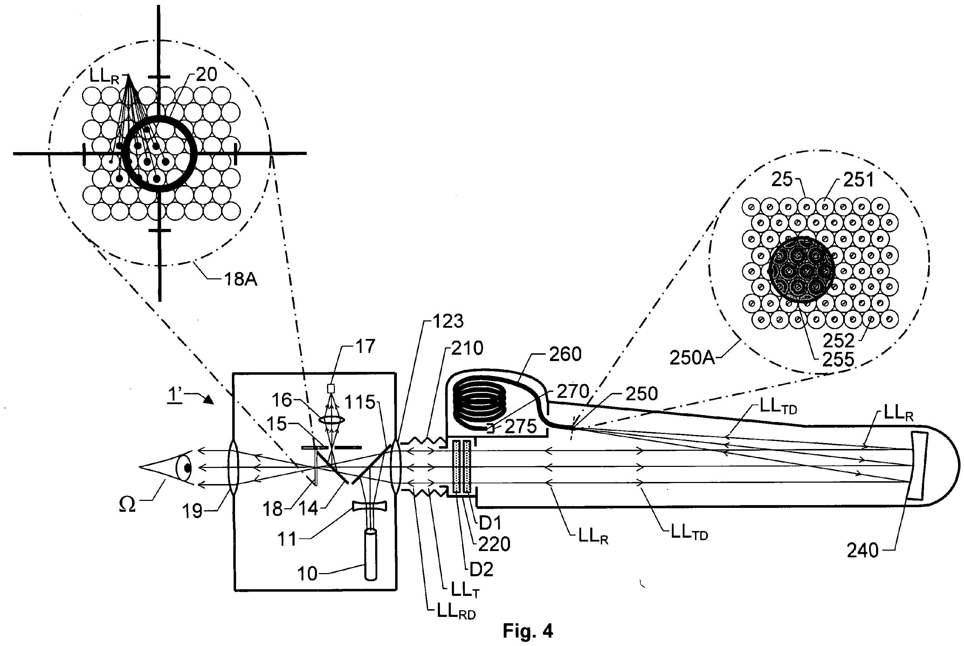

Figure 4 shows a side-view of a laser rangefinder tester according to a third embodiment of the invention. Also here reference numerals occurring in the figures 2 and 3 represent the same elements as described above with reference to these figures. In this case, however, the tester is adapted to test the function and performance of one-eyed laser rangefinders, i.e. where laser energy is both emitted and received via one and the same lens element 123.

During test operation, a one-eyed rangefinder 1' emits laser energy LL_{T} from its transmitter 10 via an auxiliary beam splitter 115 and the lens element 123. The emitted energy LL_{T} enters the tester via a reception means 210 and any filters D1 and/or D2 and continues as a first amount energy LL_{TD} directly to a ray focusing means, which is here represented by a concave mirror 240. Furthermore, if one or more filters D1, D2 are applied, each of these filters must permit passage of visible light, so that an operator Ω can view the image of the focal plane 250A there through.

The mirror 240 focuses this energy LL_{TD} onto the proximal end surface of at least one of the optical waveguides 25. A second amount of this energy, in turn, propagates through the thus illuminated optical waveguide(s) 25 and is partially reflected at the distal end surfaces thereof 270, and a portion of the second amount of energy propagates back through the illuminated optical waveguides, where delayed laser energy LL_{R} exits from their respective proximal end surfaces. Depending on whether any filters D1 and/or D2 are present in the receptacle 210, the delayed laser energy LL_{R}, or a reduced amount thereof LL_{RD}, exits via the reception means 210.

The delayed laser energy LL_{R}/LL_{RD} passes the lens element 123 and the auxiliary beam splitter 115 to the beam splitter 15. Here, the delayed laser energy LL_{R}/LL_{RD} is reflected towards the detector 17 according to what has been described above with reference to the figure 2. Any visible light, however, entering through the lens element 123 passes through both the auxiliary beam splitter 115 and the beam splitter 15 to an ocular 19, preferably via a sight means 18.

As can be seen, in this embodiment of the invention, none of the beam splitter 230, the mirror 280 or the absorption means 290 is required.

In each of the embodiments of the invention described above with reference to the figures 2 - 4 it is preferable if the proximal end surfaces of the waveguides 25 in the optical delay means 260 are slightly angled with respect to the focal plane 250. Namely, thereby the risk is minimized that so-called specular (i.e. direct) reflexes from these surfaces reach the rangefinder's 1 detector 17. Moreover, it is generally advantageous to arrange energy absorption means outside the proximal end surfaces of the waveguides 25 in the optical delay means 260, so that any laser energy falling outside the simulated target is attenuated by this energy absorption means.

Additionally, an illumination means (e.g. a lamp, or an aperture allowing visible light to enter and preventing laser energy to exit) may be arranged in proximity to the proximal end surfaces in order to improve the visibility of the simulated target to the operator.

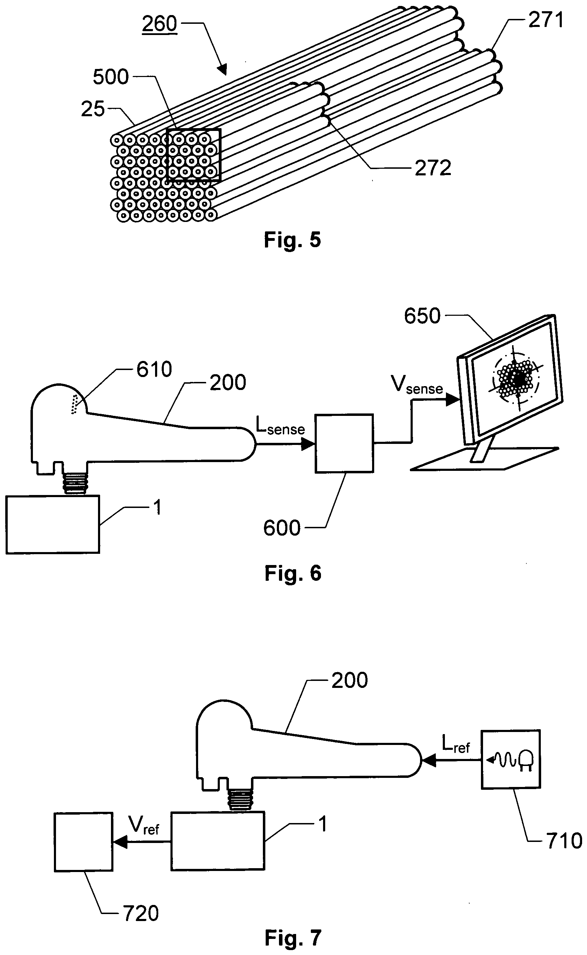

Figure 5 schematically illustrates an optical delay means 260 according to one embodiment of the invention. For illustrative purposes, the optical delay means 260 here includes a number of straight optical waveguides, or fibers 25. In practice however, these elements are preferably rolled up to accomplish a more compact design.

As can be seen in the figure 5, the optical delay means 260 includes a sub-group 500 of optical waveguides 25 whose lengths are different from (here shorter than) a remaining group of waveguides 25 of the optical delay means 260. The distal end surfaces 271 and 272 of the waveguides 25 are adapted to reflect at least a portion of any laser energy having propagated through the proximal end surfaces of the waveguides 25. Here, these distal end surfaces 271 and 272 respectively are schematically illustrated by means of bold lines.

The different propagation delays associated with the optical waveguides 25 in the sub-group 500 and the waveguides 25 outside this sub-group 500 renders it possible to test a laser rangefinder's capability to separate targets having similar view angles that are located at different distances from the laser rangefinder. Namely, laser energy entering through the proximal end surface of any of the waveguides 25 in the sub-group 500 will arrive earlier to the rangefinder's detector (i.e. less delayed) than the energy that enters through one or more of the proximal end surface of the waveguides 25 outside the sub-group 500. Hence, the sub-group 500 simulates a closer target.

Figure 6 shows a block diagram over an arrangement according to one embodiment of the invention, which allows a laser energy registered at the distal end surfaces of the optical waveguides to be presented to an operator. The arrangement comprises a laser rangefinder 1, the proposed laser rangefinder tester 200, a computer 600 (or equivalent processing means) and a display 650.

We also presume that the tester 200 includes at least one laser-energy sensor 610, which is arranged at the distal end surfaces of the optical waveguides in the optical delay means. The sensor 610 is adapted to register laser energy that has propagated through any illuminated optical waveguide 25, i.e. essentially the energy which otherwise would be emitted from the distal end surfaces. In response to the registered energy, the sensor 610 produces a sensor signal Lₛₑₙₛₑ, which is delivered on an output terminal of the tester 200. The computer 600 receives the sensor signal Lₛₑₙₛₑ and in response thereto generates a video signal Vₛₑₙₛₑ for presentation on the display 650 as a graphical representation of the laser energy that has reached the simulated target.

For example, a dark waveguide may here be represented by a first color; an illuminated waveguide by a second color, and the intensity of the received energy may be illustrated by means of a color tone, or color intensity. Thus a very intuitive operator interface is accomplished, which facilitates the proposed diagnostics and adjustment procedure.

Figure 7 shows a block diagram over an arrangement according to one embodiment of the invention through which a reference measurement in respect of a laser rangefinder may be performed. This arrangement comprises a laser rangefinder 1, the proposed laser rangefinder tester 200, an external laser energy source 710 and a signal registering means 720, such as a volt meter, an oscilloscope, a computer or other processing means.

Here, we presume that the tester 200 includes an optical input terminal that is optically connected to the distal end surface of a particular optical waveguide in the optical delay means. The optical input terminal receives an optical reference signal L_{ref} originating from a suitable laser diode in the external laser energy source 710.

The optical reference signal L_{ref} then passes through the particular optical waveguide in the tester 200 to the detector of the laser rangefinder 1, where a corresponding detected signal V_{ref} is produced. The detected signal V_{ref}, in turn, is forwarded to the signal registering means 720 for processing and production of operator feedback information. Depending on the type of registering means 720 used, a voltage/power related signal value may be displayed, or a visual and/or acoustic indication may be generated in response to the detected signal V_{ref}. Thus, based on the operator feedback information, an operator may conclude whether the rangefinder's 1 sight means and detector are aligned or not, when he/she while viewing through the ocular tilts and/or rotates the rangefinder 1 relative to the tester, so that the detector's measurement lobe moves slowly over the simulated target (represented by the optical delay means of the tester 200) and thereby receives different amounts of energy from of the optical reference signal L_{ref}.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A laser rangefinder tester comprising:
a reception means (210) adapted to receive incoming laser energy (LL_{T}) having been emitted from a transmitter (10) of a laser rangefinder (1);
an optical delay means (260) including a number of optical waveguides (25) having a respective proximal end surface and a respective distal end surface, wherein each optical waveguide (25) is adapted to receive and transport a first amount (LL_{TD}) of the incoming laser energy (LL_{T}) and in response thereto emit delayed laser energy (LL_{R}) for detection by the laser rangefinder (1); and
a ray focusing means (240, 241) adapted to focus the first amount (LL_{TD}) of the incoming laser energy onto the proximal end surface of at least one of the optical waveguides (25),
**characterized in that**
the distal end surfaces (270, 271, 272) of the optical waveguides (25) are adapted to reflect at least a portion of a second amount of laser energy (LL_{TD}) having propagated from the proximal end surface to the distal end surface back to the proximal end surface to represent the delayed laser energy (LL_{R});
the waveguides (25) are arranged to form a cross section area of a target silhouette; and **in that**
a filter receptacle (220) is arranged to hold at least one laser-energy attenuation filter (D1, D2) in a passageway for the incoming energy (LL_{T}) so as to in response to the incoming laser energy (LL_{T}) pass on a reduced amount (LL_{TD}+LL_{TD'}) of this energy for further transmission to the ray focusing means (240, 241).

2. The laser rangefinder tester according to claim 1, **characterized in that** at least one first energy absorption means (275) is arranged at the distal end surfaces (270, 271, 272), the at least one first energy absorption means (275) is adapted to terminate a main part of any laser energy of the second amount of laser energy (LL_{TD}) exiting from the distal end surfaces (270, 271, 272).

3. The laser rangefinder tester according to any one of the claims 1 or 2, **characterized in that** the ray focusing means (240, 241) is further adapted to collimate and direct delayed laser energy (LL_{R}) exiting from the proximal end of at least one of the optical waveguides (25) to a receiving means (13) of the laser rangefinder (1).

4. The laser rangefinder tester according to anyone of the preceding claims, **characterized in that** the ray focusing means comprises at least one mirror (240) which is a concave reflector.

5. The laser rangefinder tester according to anyone of the claims 1 to 3, **characterized in that** the ray focusing means comprises at least one lens element (241) of convex-spherical type.

6. The laser rangefinder tester according to claim 1, **characterized in that** it comprises a beam splitter (230) arranged between the filter receptacle (220) and the ray focusing means (240, 241), the beam splitter (230) is adapted to reflect a substantial amount (LL_{TD}) of the incoming laser energy (LL_{T}) and to permit a substantial amount of the delayed laser energy (LL_{R}) to pass through.

7. The laser rangefinder tester according to claim 6, **characterized in that** it comprises a second energy absorption means (290) adapted to terminate any incoming laser energy (LL_{TD'}) having passed through the beam splitter (230).

8. The laser rangefinder tester according to anyone of the claims 6 or 7, **characterized in that** it comprises a mirror element (280) adapted to reflect a substantial portion of the delayed laser energy (LL_{R}) towards the receiving means (13) of the laser rangefinder (1), the mirror element (280) has a laser energy reflecting surface being parallel to a surface of the beam splitter (230) adapted to reflect the substantial amount (LL_{TD}) of the incoming laser energy (LL_{T}).

9. The laser rangefinder tester according to claim 8, **characterized in that** it comprises a guide means adapted to allow an adjustment of a first distance between the mirror element (280) and the beam splitter (230) to adapt the tester to a second distance between the a transmitter (10) and the receiving means (13) of the laser rangefinder (1).

10. The laser rangefinder tester according to any one of the preceding claims, **characterized in that** the optical delay means (260) includes a sub-group (500) of optical waveguides (25) comprising at least one first waveguide which has a different length than at least one second waveguide in a remaining group of waveguides (25) in the optical delay means (260).

11. The laser rangefinder tester according to anyone of the preceding claims, **characterized in that** it comprises at least one laser-energy sensor (610) arranged at the distal end surfaces, the sensor (610) is adapted to register the second amount of laser energy (LL_{TD}) propagated through at least one of the optical waveguides (25) and in response thereto produce a sensor signal (Lsense) on an output terminal of the tester (200).

12. The laser rangefinder tester according to anyone of the preceding claims, **characterized in that** it comprises an optical input terminal adapted to receive an optical reference signal (L_{ref}), and the optical input terminal is optically connected to the distal end surface of a particular optical waveguide (25) in the optical delay means (260).

13. Method for testing the performance of a laser rangefinder (1) by using the laser rangefinder tester described in any of the claims 1-10, **characterized in that** the method involves:
emitting laser energy (LL_{T}) from a laser transmitter (10) of
the laser rangefinder (1); and
registering delayed laser energy (LL_{R}) returned from the laser rangefinder tester in a laser detector (17) of the laser rangefinder (1).

## Patentansprüche

1. Laserentfernungsmesserprüfgerät umfassend:
ein Empfangsmittel (210), das dafür eingerichtet ist, eingehende, von einem Sender (10) eines Laserentfernungsmessers (1) ausgesendete Laserenergie (LL_{T}) zu empfangen;
ein optisches Verzögerungsmittel (260) umfassend eine Anzahl von optischen Wellenleitern (25) mit einer jeweiligen proximalen Endfläche und einer jeweiligen distalen Endfläche, wobei jeder optische Wellenleiter (25) dafür eingerichtet ist, eine erste Menge (LL_{TD}) von eingehender Laserenergie (LL_{T}) zu empfangen und zu fördern und als Reaktion darauf, verzögerte Laserenergie (LL_{R}) zum Detektieren durch den Laserentfernungsmesser (1) auszusenden; und
ein Strahlfokussierungsmittel (240, 241), das dafür eingerichtet ist, die erste Menge (LL_{TD}) von eingehender Laserenergie auf die proximale Endfläche des mindestens einen der optischen Wellenleiter (25) zu fokussieren,
**dadurch gekennzeichnet, dass**
die distalen Endflächen (270, 271, 272) der optischen Wellenleiter (25) dafür eingerichtet sind, mindestens einen Anteil der zweiten Menge von Laserenergie (LL_{TD}), die sich von der proximalen Endfläche zur distalen Endfläche zurück zur proximalen Endfläche ausgebreitet hat, zu reflektieren, um die verzögerte Laserenergie (LL_{R}) zu repräsentieren;
die Wellenleiter (25) dafür eingerichtet sind, einen Querschnittsbereich einer Zielsilhouette zu bilden; und dass
ein Filterbehälter (220) dafür eingerichtet ist, mindestens ein Laserenergiedämpfungsfilter (D1, D2) in einem Durchgang für die eingehende Energie (LL_{T}) zu halten, um als Reaktion auf die eingehende Laserenergie (LL_{T}) eine verringerte Menge (LL_{TD}+LL_{TD'}) dieser Energie für die weitere Übertragung an das Strahlfokussierungsmittel (240, 241) weiterzuleiten.

2. Laserentfernungsmesserprüfgerät nach Anspruch 1, **dadurch gekennzeichnet, dass** mindestens ein erstes Energieabsorptionsmittel (275) an den distalen Endflächen (270, 271, 272) angeordnet ist, wobei das mindestens eine erste Energieabsorptionsmittel (275) dafür eingerichtet ist, einen Hauptteil irgendeiner Laserenergie der zweiten Menge von Laserenergie (LL_{TD}), die von den distalen Endflächen (270, 271, 272) austritt, zu beenden.

3. Laserentfernungsmesserprüfgerät nach einem der Ansprüche 1 oder 2, **dadurch gekennzeichnet, dass** das Strahlfokussierungsmittel (240, 241) weiter dafür eingerichtet ist, verzögerte Laserenergie (LL_{R}), die vom proximalen Ende des mindestens einen der optischen Wellenleiter (25) austritt, zu einem Empfangsmittel (13) des Laserentfernungsmessers (1) zu kollimieren und zu leiten.

4. Laserentfernungsmesserprüfgerät nach einem der vorgehenden Ansprüche, **dadurch gekennzeichnet, dass** das Strahlfokussierungsmittel mindestens einen Spiegel (240) umfasst, der ein konkaver Reflektor ist.

5. Laserentfernungsmesserprüfgerät nach einem der Ansprüche 1 bis 3, **dadurch gekennzeichnet, dass** das Strahlfokussierungsmittel mindestens ein Linsenelement (241) einer konvex-kugelförmigen Art umfasst.

6. Laserentfernungsmesserprüfgerät nach Anspruch 1, **dadurch gekennzeichnet, dass** es einen Strahlteiler (230) umfasst, der zwischen dem Filterbehälter (220) und dem Strahlfokussierungsmittel (240, 241) angeordnet ist, wobei der Strahlteiler (230) dafür eingerichtet ist, eine wesentliche Menge (LL_{TD}) der eingehenden Laserenergie (LL_{T}) zu reflektieren und zu erlauben, dass eine wesentliche Menge der verzögerten Laserenergie (LL_{R}) durchpassieren kann.

7. Laserentfernungsmesserprüfgerät nach Anspruch 6, **dadurch gekennzeichnet, dass** es ein zweites Energieabsorptionsmittel (290) umfasst, dass dafür eingerichtet ist, irgendeine eingehende Laserenergie (LL_{TD'}), die durch den Strahlteiler (230) durchpassiert ist, zu beenden.

8. Laserentfernungsmesserprüfgerät nach einem der Ansprüche 6 oder 7, **dadurch gekennzeichnet, dass** es ein Spiegelelement (280) umfasst, das dafür eingerichtet ist, einen wesentlichen Anteil der verzögerten Laserenergie (LL_{R}) gegen das Empfangsmittel (13) des Laserentfernungsmessers (1) zu reflektieren, wobei das Spiegelelement (280) eine laserenergiereflektierende Oberfläche aufweist, die zu einer Oberfläche des Strahlteilers (230) parallel ist, eingerichtet zum Reflektieren der wesentlichen Menge (LL_{TD}) der
eingehenden Laserenergie (LL_{T}).

9. Laserentfernungsmesserprüfgerät nach Anspruch 8, **dadurch gekennzeichnet, dass** es ein Führungsmittel umfasst, das dafür eingerichtet ist, eine Einstellung eines ersten Abstands zwischen dem Spiegelelement (280) und dem Strahlteiler (230) zu ermöglichen, um das Prüfgerät an einen zweiten Abstand zwischen einem Sender (10) und dem Empfangsmittel (13) des Laserentfernungsmessers (1) anzupassen.

10. Laserentfernungsmesserprüfgerät nach einem der vorgehenden Ansprüche, **dadurch gekennzeichnet, dass** das optische Verzögerungsmittel (260) eine Untergruppe (500) von optischen Wellenleitern (25) umfassend mindestens einen ersten Wellenleiter umfasst, welcher eine andere Länge als mindestens ein zweiter Wellenleiter in einer verbleibenden Gruppe von Wellenleitern (25) im optischen Verzögerungsmittel (260).

11. Laserentfernungsmesserprüfgerät nach einem der vorgehenden Ansprüche, **dadurch gekennzeichnet, dass** es mindestens einen Laserenergiesensor (610) umfasst, der an den distalen Endflächen angeordnet ist, wobei der Sensor (610) dafür eingerichtet ist, die zweite Menge an Laserenergie (LL_{TD}), die sich durch mindestens einen der optischen Wellenleiter (25) ausgebreitet hat, zu registrieren, und als Reaktion darauf ein Sensorsignal (Lsense) auf einem Ausgangsanschluss des Prüfgeräts (200) zu erzeugen.

12. Laserentfernungsmesserprüfgerät nach einem der vorgehenden Ansprüche, **dadurch gekennzeichnet, dass** es einen optischen Eingangsanschluss umfasst, der dafür eingerichtet ist, ein optisches Referenzsignal (L_{ref}) zu empfangen, und der optische Eingangsanschluss ist mit der distalen Endfläche eines bestimmten optischen Wellenleiters (25) im optischen Verzögerungsmittel (260) optisch verbunden.

13. Verfahren zum Prüfen der Leistung eines Laserentfernungsmessers (1) durch Anwendung des in einem der Ansprüche 1-10 beschriebenen Laserentfernungsmesserprüfgeräts, **dadurch gekennzeichnet, dass** das Verfahren Folgendes umfasst:
Aussenden von Laserenergie (LL_{T}) von einem Lasersender (10) des Laserentfernungsmessers (1); und
Registrieren von verzögerter Laserenergie (LL_{R}), die vom Laserentfernungsmesserprüfgerät in einem Laserdetektor (17) des Laserentfernungsmessers (1) zurückgesendet wird.

## Revendications

1. Testeur de télémètre laser comprenant :
un moyen de réception (210) adapté pour recevoir l'énergie laser entrante (LL_{T}) émise par un émetteur (10) d'un télémètre laser (1) ;
un moyen de retard optique (260) comprenant un certain nombre de guides d'ondes optiques (25) ayant une surface d'extrémité proximale respective et une surface d'extrémité distale respective, dans lequel chaque guide d'ondes optique (25) est adapté pour recevoir et transporter une première quantité (LL_{TD}) de l'énergie laser entrante (LL_{T}) et émet en réponse à cela une énergie laser retardée (LL_{R}) pour la détection par le télémètre laser (1) ; et
un moyen de focalisation de rayons (240, 241) adapté pour focaliser la première quantité (LL_{TD}) de l'énergie laser entrante sur la surface d'extrémité proximale d'au moins un des guides d'ondes optiques (25),
**caractérisé en ce que**
les surfaces d'extrémité distales (270, 271, 272) des guides d'ondes optiques (25) sont adaptés pour réfléchir au moins une partie d'une deuxième quantité d'énergie laser (LL_{TD}) s'étant propagée de la surface d'extrémité proximale à la surface d'extrémité distale vers la surface d'extrémité proximale arrière pour représenter l'énergie laser retardée (LL_{R});
les guides d'ondes (25) sont agencés pour former une étendue de section transversale d'une silhouette cible ; et **en ce que**
un réceptacle de filtre (220) est agencé pour contenir au moins un filtre d'atténuation d'énergie laser (D1, D2) dans un passage pour l'énergie entrante (LL_{T}) afin de répondre à l'énergie laser entrante (LL_{T}) en transmettant une quantité réduite (LL_{TD}+LL_{TD'}) de cette énergie pour une transmission ultérieure au moyen de focalisation de rayon (240, 241).

2. Testeur de télémètre laser selon la revendication 1, **caractérisé en ce qu'**au moins un premier moyen d'absorption d'énergie (275) est disposé au niveau des surfaces d'extrémité distales (270, 271, 272), ledit au moins un premier moyen d'absorption d'énergie (275) est adapté pour terminer une partie principale de toute énergie laser de la deuxième quantité d'énergie laser (LL_{TD}) sortant des surfaces d'extrémité distales (270, 271, 272).

3. Testeur de télémètre laser selon l'une quelconque des revendications 1 ou 2, **caractérisé en ce que** le moyen de focalisation de rayons (240, 241) est en outre adapté pour collimater et diriger une énergie laser retardée (LL_{R}) sortant de l'extrémité proximale d'au moins l'un des guides d'ondes optiques (25) à un moyen de réception (13) du télémètre laser (1).

4. Testeur de télémètre laser selon l'une quelconque des revendications précédentes, **caractérisé en ce que** le moyen de focalisation de rayons comprend au moins un miroir (240) qui est un réflecteur concave.

5. Testeur de télémètre laser selon l'une quelconque des revendications 1 à 3, **caractérisé en ce que** le moyen de focalisation de rayons comprend au moins un élément de lentille (241) de type sphérique convexe.

6. Testeur de télémètre laser selon la revendication 1, **caractérisé en ce qu'**il comprend un séparateur de faisceau (230) disposé entre le réceptacle de filtre (220) et le moyen de focalisation de rayons (240, 241), le séparateur de faisceau (230) étant adapté pour réfléchir un quantité substantielle (LL_{TD}) de l'énergie laser entrante (LL_{T}) et permettre à une quantité substantielle de l'énergie laser retardée (LL_{R}) de passer à travers.

7. Testeur de télémètre laser selon la revendication 6, **caractérisé en ce qu'**il comprend un deuxième moyen d'absorption d'énergie (290) adapté pour mettre fin à toute énergie laser entrante (LL_{TD'}) ayant traversé le séparateur de faisceau (230).

8. Testeur de télémètre laser selon l'une quelconque des revendications 6 ou 7, **caractérisé en ce qu'**il comprend un élément de miroir (280) adapté pour réfléchir une partie importante de l'énergie laser retardée (LL_{R}) vers le moyen de réception (13) du télémètre laser (1), l'élément miroir (280) présente une surface réfléchissant l'énergie laser parallèle à une surface du séparateur de faisceau (230) adaptée pour réfléchir la quantité substantielle (LL_{TD}) de l'énergie laser entrante (LL_{T}).

9. Testeur de télémètre laser selon la revendication 8, **caractérisé en ce qu'**il comprend un moyen de guidage adapté pour permettre un réglage d'une première distance entre l'élément de miroir (280) et le séparateur de faisceau (230) afin d'adapter le testeur à une deuxième distance entre l'émetteur (10) et le moyen de réception (13) du télémètre laser (1).

10. Testeur de télémètre laser selon l'une quelconque des revendications précédentes, **caractérisé en ce que** le moyen de retard optique (260) comprend un sous-groupe (500) de guides d'ondes optiques (25) comprenant au moins un premier guide d'ondes qui a une longueur différente d'au moins un deuxième guide d'ondes dans un groupe restant de guides d'ondes (25) dans le moyen de retard optique (260).

11. Testeur de télémètre laser selon l'une quelconque des revendications précédentes, **caractérisé en ce qu'**il comprend au moins un capteur d'énergie laser (610) agencé au niveau des surfaces d'extrémité distales, le capteur (610) étant adapté pour enregistrer la deuxième quantité d'énergie laser (LL_{TD}) se propagent à travers au moins un des guides d'ondes optiques (25) et produisent en réponse à cela un signal de capteur (Lsense) sur une borne de sortie du testeur (200).

12. Testeur de télémètre laser selon l'une quelconque des revendications précédentes, **caractérisé en ce qu'**il comprend une borne d'entrée optique apte à recevoir un signal de référence optique (L_{ref}), et la borne d'entrée optique est connectée optiquement à la surface d'extrémité distale d'un guide d'onde optique particulier (25) dans le moyen de retard optique (260).

13. Procédé pour tester les performances d'un télémètre laser (1) en utilisant testeur de télémètre laser décrit dans l'une quelconque des revendications 1 à 10, **caractérisé en ce que** le procédé comprend les étapes consistant à :
émettre d'énergie laser (LL_{T}) à partir d'un émetteur laser (10) du télémètre laser (1) ; et
enregistrer l'énergie laser retardée (LL_{R}) renvoyée par le testeur de télémètre laser dans un détecteur laser (17) du télémètre laser (1).
